# EUROPÄISCHE PATENTSCHRIFT

(11) **EP 3 388 552 B1**
(45) Veröffentlichungstag und Bekanntmachung des Hinweises auf die Patenterteilung: **03.06.2020**
(21) Anmeldenummer: 18166722.1
(22) Anmeldetag: 11.04.2018
(51) Int. Cl.: C25B 1/13, C25B 9/04, C25B 15/02, C02F 1/467, C02F 1/78

(54) **VERFAHREN ZUR STEUERUNG EINER ELEKTROLYSEZELLE ZUR ELEKTROLYTISCHEN ERZEUGUNG VON OZON UND EINE VORRICHTUNG ZUR DESINFEKTION VON WASSER**
METHOD FOR CONTROLLING AN ELECTROLYSIS CELL FOR THE ELECTROLYTIC PRODUCTION OF OZONE AND A DEVICE FOR THE DISINFECTION OF WATER
PROCÉDÉ DE COMMANDE D'UNE CELLULE D'ÉLECTROLYSE DESTINÉ À LA PRODUCTION ÉLECTROLYTIQUE D'OZONE ET DISPOSITIF DE DÉSINFECTION DE L'EAU

(30) Priorität: 12.04.2017 DE 102017107891
(43) Veröffentlichungstag der Anmeldung: 17.10.2018
(73) Patentinhaber: Bernard, Willi, 61250 Usingen (DE)
(72) Erfinder: Bernard, Willi, 61250 Usingen (DE)
(74) Vertreter: Boult Wade Tennant LLP

(56) Entgegenhaltungen:
- WO-A1-2007/138948
- JP-A- H07 242 402
- JP-A- 2007 083 174
- US-A1- 2015 129 419
- US-A1- 2016 186 336
- Anonymous: "GeD mbH - Sanitation Technology "Kurzeinbauanleitung"", , 29. Dezember 2016 (2016-12-29), XP055485794, Gefunden im Internet: URL:https://web.archive.org/web/2016122900 4034/http://ged-mbh.com/Kurzeinbauanleitun g.html [gefunden am 2018-06-19]

## Beschreibung

Die Erfindung betrifft ein Verfahren zur Steuerung einer Elektrolysezelle zur elektrolytischen Erzeugung von Ozon gemäß dem Oberbegriff von Anspruch 1 sowie eine Vorrichtung zur Desinfektion von Wasser gemäß dem Oberbegriff von Anspruch 5.

Insbesondere in lebensmittelverarbeitenden Betrieben, wie auch bei der Herstellung von Eis, ist die Gewährleistung von keimfreien oder zumindest keimarmen Bedingungen zwingend erforderlich. So ist in diesen Bereichen die Desinfektion der Räumlichkeiten, Oberflächen und Geräte von zentraler Bedeutung. Zur Desinfektion wird mitunter Ozon eingesetzt, welches keine Rückstände eines Desinfektionsmittels an den behandelten Gegenständen zurücklässt.
Ein Desinfektionsmittel, welches hingegen aus einer flüssigen oder festen Chemikalie besteht, kann auf den behandelten Gegenständen anhaften und zu einer ungewollten Belastung der im Folgenden mit diesen Gegenständen hergestellten Lebensmittel führen.

Es ist bekannt, Elektrolysezellen zur Erzeugung von Ozon in eine Wasserleitung zu integrieren, um aus eingeströmten Wasser Ozon herzustellen, welches gleichzeitig in Wasser gelöst wird. Dieses Ozon-angereicherte Wasser kann dann beispielweise als Desinfektionsmittel in lebensmittelverarbeiteten Betrieben oder zur Herstellung von Eis verwendet werden.
Eine Elektrolysezelle zur Ozonherstellung wird beispielweise in der DE 100 25 167 A1 gezeigt.

Problematisch hierbei ist, dass die Elektrolysezelle jedes Mal, wenn mit Ozon angereichertes Wasser benötigt wird, angeschaltet und nach Abschluss der Reinigungsarbeiten ausgeschaltet werden muss. Sollte das Anschalten der Elektrolyse bei Entnahme von Wasser zur Reinigung vergessen werden, kann keine ausreichende Desinfektion gewährleistet werden.

Im umgekehrten Fall, wenn das Ausschalten der Elektrolysezelle vergessen wird, erfolgt weiterhin eine Ozonproduktion, ohne dass kontinuierlich Wasser durch die Elektrolysezelle fließt. Dieses kann nicht nur die Elektrolysezelle beschädigen, sondern auch hohe Mengen an Ozon in den betroffenen Räumlichkeiten freisetzen. Dies kann zu Reizungen der Augen und Atemwege der in den Räumlichkeiten arbeitenden Personen führen, da Ozon als toxisch, brandfördernd und ätzend eingestuft ist.

Folglich ist es vorteilhaft eine automatische Steuerung vorzusehen, die ein Ein- und Ausschalten der Elektrolysezelle in Abhängigkeit von der Benutzung steuert. Hierfür kann beispielweise ein Strömungs-Schalter oder Flusswächter, wie in DE 196 31 842 A1 gezeigt, eingesetzt werden.
Hierbei ist nachteilig, dass ein zusätzliches mechanisches Bauteil notwendig ist, welches separat hergestellt, eingebaut und gewartet werden muss. Zudem kann dieses mechanisch betriebene Bauteil mit der Zeit schwergängig werden, beispielweise infolge von Verschleiß oder Ablagerungen, wodurch die Funktionsfähigkeit der Steuerung beeinträchtigt wäre.

Weitere Elektrolysezellen sind aus der US 2015/129419 A1 , der JP 2007 083174 A, der US 2016/186336 A1 und der JP H07 242402 A bekannt.

Aufgabe der Erfindung ist es daher, ein Verfahren zur Steuerung einer Elektrolysezelle bereitzustellen, welches eine sichere Benutzung der Elektrolysezelle in Abhängigkeit von dem Wasserdurchfluss gewährleistet. Insbesondere soll das Verfahren eine lange Funktionsfähigkeit der Elektrolysezelle sowie eine Minimierung einer potentiellen Gesundheitsgefährdung ermöglichen.

Zudem soll eine Vorrichtung zur Desinfektion von Wasser bereitgestellt werden, die lange funktionsfähig sowie einfach und kostengünstig herzustellen ist.

Hauptmerkmale der Erfindung sind im kennzeichnenden Teil von Anspruch 1 und 5 angegeben. Ausgestaltungen sind Gegenstand der Ansprüche 2 bis 4 und 6 bis 12.

Bei einem Verfahren zur Steuerung einer Elektrolysezelle zur elektrolytischen Erzeugung von Ozon, die zwischen einem ausgeschalteten und einem eingeschalteten Zustand einer Versorgungsspannung schaltbar und von Wasser durchströmbar ist, wobei eine Änderung des Wasserdurchflusses in der Elektrolysezelle ein Signal auslöst, welches an eine Steuereinheit übermittelt wird und die Steuereinheit die Versorgungsspannung der Elektrolysezelle ein- oder ausschaltet, sieht die Erfindung deshalb vor, dass das Signal durch eine Änderung einer Potentialdifferenz ausgelöst wird, die zwischen zwei Messstellen innerhalb des durchströmten Volumens der Elektrolysezelle gemessen wird, wobei eine Erhöhung des Wasserdurchflusses eine Potentialdifferenz erzeugt, die ein Signal zum Einschalten der Elektrolysezelle durch die Steuereinheit auslöst, eine Senkung des Wasserdurchflusses eine Änderung der Potentialdifferenz erzeugt, die ein Signal zum Ausschalten der Elektrolysezelle (3) durch die Steuereinheit auslöst und weiterhin im ausgeschalteten Zustand an der Elektrolysezelle (3) eine Ruhespannung von 0,2 -2 V anliegt.

In dem erfindungsgemäßen Verfahren wird eine Änderung des Wasserdurchflusses in der Elektrolysezelle zur Registrierung eines Signals genutzt, welches an eine Steuereinheit übermittelt wird und daraus folgend die Elektrolysezelle ein- und ausschaltet. Dadurch kann eine sichere Benutzung der Elektrolysezelle in Abhängigkeit von dem Wasserdurchfluss gewährleistet werden.

Durchströmt kein Wasser die Elektrolysezelle, die insbesondere in eine Wasserleitung integriert ist, befindet sich diese in einem Ruhezustand, welches dem ausgeschalteten Zustand entspricht. Wird nun die Wasserleitung geöffnet, so dass wieder Wasser durch die Elektrolysezelle strömt, führt dieses zu einer Änderung der Potentialdifferenz zwischen den Messstellen, die detektiert werden kann. Diese Änderung der Potentialdifferenz wird als Signal genutzt, welches an eine Steuereinheit übermittelt wird. Die Steuereinheit wiederum schaltete die Elektrolysezelle bei Erhalt des Signals an, welches ein Einschaltsignal ist.

Dadurch wird gewährleistet, dass ausreichend Ozon im entnommenen Wasser gelöst ist, um eine ausreichende Desinfektionswirkung zu erzielen.

Wird nach Abschluss der Reinigung mit dem Desinfektionsmittel oder der Eisherstellung die Wasserversorgung geschlossen, indem beispielweise der Wasserhahn zugedreht wird, tritt erneut eine Potentialänderung zwischen den Messstellen auf, da kein frisches Wasser nachströmt. Dieser Sprung der Potentialdifferenz wird detektiert und zur Steuereinheit übermittelt, wo es als Ausschaltsignal dient. Die Steuereinheit schaltet die Elektrolysezelle bei Erhalt des Signals, welches vom nun eingeschalteten zum ausgeschalteten Zustand erfolgt.

Folglich erzeugt eine Senkung des Wasserdurchflusses, insbesondere ein Stoppen des Wasserdurchflusses, eine Änderung der Potentialdifferenz, die ein Signal zum Ausschalten der Elektrolysezelle durch die Steuereinheit auslöst.

Dadurch wird gewährleistet, dass die Elektrolysezelle nicht ohne kontinuierlichen Wasserdurchfluss weiterläuft und keine hohen Ozonkonzentrationen in die umliegenden Räumlichkeiten freigesetzt werden.
Hierdurch wird eine lange Funktionsfähigkeit der Elektrolysezelle gewährleistet und eine potentielle Gesundheitsgefährdung ausgeschlossen.

In einer bevorzugten Ausgestaltung ist vorgesehen, dass die Messstellen durch Elektroden der Elektrolysezelle gebildet werden. Hierdurch werden keine zusätzlichen Bauteile benötigt und eine entsprechende Elektrolysezelle ist einfach und kostengünstig herstellbar.

Vorzugsweise beträgt die Versorgungsspannung der Elektrolysezelle im eingeschalteten Zustand 6 - 40 V, bevorzugt 16 - 36 V, besonders bevorzugt 24 V. Bei dieser Versorgungsspannung, beziehungsweise in den genannten Bereichen wird gewährleistet, dass ausreichend Ozon hergestellt und in Wasser gelöst wird, um eine gute Desinfektion des herzustellenden Eises oder der zu reinigenden Oberflächen gewährleistet werden kann.

Bevorzugt ist vorgesehen, dass eine Ruhespannung im ausgeschalteten Zustand an der Elektrolysezelle anliegt, die 0,4 - 1 V, bevorzugt 0,7 V beträgt.

Diese Ruhespannung im ausgeschalteten Zustand verhindert eine Passivierung der Elektroden, beispielweise durch oberflächliche Oxidation des Elektrodenmaterials, wodurch die Funktionsfähigkeit der Elektrolysezelle beeinträchtigt werden kann.

Ist eine Ruhespannung vorgesehen, wird die Elektrolysezelle nicht vollständig abgeschaltet, sondern nur in einen Modus geschaltet, der mit einem Standby-Betrieb vergleichbar ist. Dadurch kann eine möglichst lange Betriebsdauer der Elektrolysezelle erreicht werden.

Zudem betrifft die Erfindung eine Vorrichtung zur Desinfektion von Wasser nach einem Verfahren der Ansprüche 1 bis 7 mit mindestens einer Elektrolysezelle zur elektrolytischen Erzeugung von Ozon, wobei die Elektrolysezelle mindestens eine Anode, eine Kathode und eine Trennschicht, die zwischen der Anode und Kathode angeordnet ist, aufweist.

Erfindungsgemäß ist vorgesehen, dass zwei Messstellen innerhalb der Elektrolysezelle angeordnet sind, zwischen denen eine Potentialdifferenz, beziehungsweise eine Änderung der Potentialdifferenz, messbar ist, die als Signal an eine Steuereinheit übermittelbar ist, wobei die Steuereinheit die Versorgungsspannung der Elektrolysezelle (3) in Abhängigkeit von diesem Signal ein- oder ausschaltet, und im ausgeschalteten Zustand der Versorgungsspannung an der Elektrolysezelle (3) eine Ruhespannung von 0,2 bis 2 V anliegt..

Diese Bauweise ermöglicht eine einfache und präzise Steuerung der Vorrichtung mit der Elektrolysezelle, in Abhängigkeit von dem Wasserdurchfluss. Zudem ist die Elektrolysezelle einfach herzustellen.

Die Ruhespannung im ausgeschalteten Zustand verhindert eine Passivierung der Elektroden, beispielweise durch oberflächliche Oxidation des Elektrodenmaterials, wodurch die Funktionsfähigkeit der Elektrolysezelle beeinträchtigt werden kann.

Ist eine Ruhespannung vorgesehen, wird die Elektrolysezelle nicht vollständig abgeschaltet, sondern nur in einen Modus geschaltet, der mit einem Standby-Betrieb vergleichbar ist. Dadurch kann eine möglichst lange Betriebsdauer der Elektrolysezelle erreicht werden.

In einer bevorzugten Ausgestaltung ist vorgesehen, dass die Messstellen durch Elektroden der Elektrolysezelle gebildet werden. Dadurch müssen keine separaten Bauteile vorgesehen werden, wodurch die Herstellung einer erfindungsgemäßen Vorrichtung einfach und kostengünstig durchführbar ist.

In einer alternativen Ausgestaltung kann vorgesehen sein, die Messstellen in der Nähe der Elektroden, insbesondere in einem Gehäuse der Elektrolysezelle anzuordnen. Hierdurch kann eine Steuerung des Ein- und Ausschaltens gesteuert werden, ohne dass auf die Elektroden zurückgegriffen werden muss.

Vorzugsweise ist die Trennschicht eine Membran, insbesondere ein Feststoffelektrolyt. Hierdurch kann eine gute Ozonproduktion der Elektrolysezelle gewährleistet werden.

Es ist bevorzugt vorgesehen, dass die Versorgungsspannung der Elektrolysezelle im eingeschalteten Zustand 6 - 40 V, bevorzugt 16 - 36 V, besonders bevorzugt 24 V beträgt. Bei dieser Versorgungsspannung, beziehungsweise in den genannten Versorgungsspannungsbereichen wird gewährleistet, dass ausreichend Ozon hergestellt und in Wasser gelöst wird, um eine gute Desinfektion des herzustellenden Eises oder der zu reinigenden Oberflächen gewährleistet werden kann.

In einer bevorzugten Ausgestaltung ist vorgesehen, dass die Ruhespannung, die im ausgeschalteten Zustand an der Elektrolysezelle anliegt, 0,4 - 1 V, bevorzugt 0,7 V beträgt.

Vorzugsweise weist die Vorrichtung eine interne Stromversorgung auf, die in Form einer Batterie oder eines Akkumulators ausgebildet ist. Dadurch kann auch bei einem Stromausfall sichergestellt werden, dass die Elektrolysezelle nicht vollständig ausgeschaltet wird, wodurch keinerlei Spannung mehr anliegen würde. Dadurch kann eine langanhaltende Funktionsfähigkeit der Vorrichtung, insbesondere der Elektrolysezelle, gewährleistet werden.

Durch die interne Stromversorgung kann eine Notversorgungsspannung von 0,1 bis 0,3 mV erzeugt werden. Insbesondere ist die interne Stromversorgung als 9 V Blockakkumulator ausgebildet.

Vorzugsweise ist die Elektrolysezelle austauschbar. Dadurch kann eine defekte Elektrolysezelle ausgetauscht werden, ohne dass ein vollständiger Umbau in Form eines Aus- und Einbaus der Vorrichtung notwendig wäre.

In einer bevorzugten Ausgestaltung sind mehrere Elektrolysezellen vorgesehen. Diese Elektrolysezellen können parallel und/oder in Reihe geschaltet sein.

Sind mehrere Elektrolysezellen parallel angeordnet, wird das durch die Vorrichtung strömende Wasser auf die mehreren Elektrolysezellen aufgeteilt. Dadurch kann eine hohe Ozonkonzentration im aus der Vorrichtung ausströmenden Wasser erzeugt werden.

Alternativ ist auch eine Reihenschaltung von mehreren Elektrolysezellen möglich. Dabei erhöht sich die Konzentration des im Wasser gelösten Ozons nach jeder Elektrolysezelle.

In einer bevorzugten Ausgestaltung ist die erfindungsgemäße Vorrichtung einer Eismaschine vorgeschaltet. Dadurch kann aus dem mit Ozon angereicherten Wasser Eis produziert werden, welches beispielweise zur Kühlung von Lebensmitteln eingesetzt werden kann.
Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

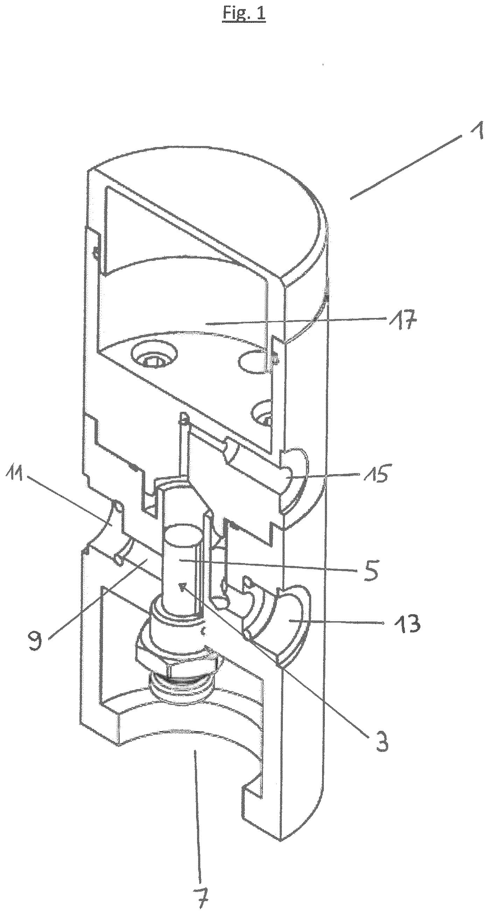

- Fig. 1: eine Schnittansicht einer erfindungsgemäßen Vorrichtung

Figur 1 zeigt eine perspektivische Schnittansicht einer erfindungsgemäßen Vorrichtung 1 mit mindestens einer Elektrolysezelle 3, die in einem Gehäuse 5 angeordnet ist. Das Gehäuse 5 mit der mindestens einen Elektrolysezelle 3 kann austauschbar ausgebildet sein, wobei ein Austausch durch eine Öffnung 7 in der Vorrichtung 1 erfolgt. Das Gehäuse 5 kann beispielweise mit Hilfe eines Gewindes, einer Verrastung oder eines Bajonettverschlusses in der Vorrichtung 1 befestigt sein.

Um einen Wasserdurchfluss durch das Gehäuse 5 und somit durch die mindestens eine Elektrolysezelle 3 zu gewährleisten, ist das Gehäuse 5 in einer wasserführenden Leitung 9 angeordnet. Die wasserführende Leitung 9 wird von einem Wasserzulauf 11 und einem Wasserauslauf 13 auf entgegengesetzten Seiten der Vorrichtung 1 begrenzt. Das Gehäuse 5 ist zumindest auf teilweise wasserdurchlässig ausgebildet.

Von dem Gehäuse 5 ausgehend, ist zudem ein Anschluss 15 vorgesehen, an welchem beispielsweise ein Drucksensor vorgesehen werden kann. An diesem Anschluss kann aber auch ein Leitwertmessgerät, ein Wassergütesensor oder ein Überdruckventil angeschlossen werden. Schließlich kann der Anschluss 15 auch zur Entnahme von Ozonwasser für eine externe Anwendung dienen, z.B. um mit diesem Flächen oder sonstige Geräte neben dem Hauptgerät zu desinfizieren, das ein Gerät zur Erzeugung von Eis aus dem Ozonwasser sein kann.

Weiterhin ist in der Vorrichtung 1 ein Aufbewahrungsraum 17 zur Platzierung der benötigten Elektronik, insbesondere der Steuereinheit, und bei Bedarf einer internen Stromquelle, insbesondere in Form eines Akkumulators, vorgesehen.

Zudem können in dem Gehäuse 5 auch mehrere Elektrolysezellen angeordnet sein, die parallel oder in Reihe zueinander angeordnet sind.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Vorrichtung
- 3: Elektrolysezelle
- 5: Gehäuse
- 7: Öffnung
- 9: wasserführende Leitung
- 11: Wasserzulauf
- 13: Wasserauslauf
- 15: Anschluss
- 17: Aufbewahrungsraum

## Patentansprüche

1. Verfahren zur Steuerung einer Elektrolysezelle (3) zur elektrolytischen Erzeugung von Ozon, die zwischen einem ausgeschalteten und einem eingeschalteten Zustand einer Versorgungsspannung schaltbar und von Wasser durchströmbar ist, wobei eine Änderung des Wasserdurchflusses in der Elektrolysezelle (3) ein Signal auslöst, welches an eine Steuereinheit übermittelt wird und die Steuereinheit die Versorgungsspannung der Elektrolysezelle (3) ein- oder ausschaltet, **dadurch gekennzeichnet, dass** das Signal durch eine Änderung einer Potentialdifferenz ausgelöst wird, die zwischen zwei Messstellen innerhalb des durchströmten Volumens der Elektrolysezelle (3) gemessen wird, wobei eine Erhöhung des Wasserdurchflusses eine Änderung der Potentialdifferenz erzeugt, die ein Signal zum Einschalten der Elektrolysezelle (3) durch die Steuereinheit auslöst und eine Senkung des Wasserdurchflusses eine Änderung der Potentialdifferenz erzeugt, die ein Signal zum Ausschalten der Elektrolysezelle (3) durch die Steuereinheit auslöst und weiterhin im ausgeschalteten Zustand an der Elektrolysezelle (3) eine Ruhespannung von 0,2 -2 V anliegt.

2. Verfahren nach Anspruch 1, **dadurch gekennzeichnet, dass** die Messstellen durch Elektroden der Elektrolysezelle (3) gebildet werden.

3. Verfahren nach einem der vorhergehenden Ansprüche, **dadurch gekennzeichnet, dass** die Versorgungsspannung der Elektrolysezelle (3) im eingeschalteten Zustand 6 - 40 V, bevorzugt 16 - 36 V, besonders bevorzugt 24 V beträgt.

4. Verfahren nach einem der vorhergehenden Ansprüche, **dadurch gekennzeichnet, dass** die im ausgeschalteten Zustand an der Elektrolysezelle (3) anliegende Ruhespannung 0,4 - 1 V, bevorzugt 0,7 V beträgt.

5. Vorrichtung zur Desinfektion von Wasser nach einem Verfahren der Ansprüche 1 bis 4 mit mindestens einer Elektrolysezelle (3) zur elektrolytischen Erzeugung von Ozon, wobei die Elektrolysezelle (3) mindestens eine Anode, eine Kathode und eine Trennschicht, die zwischen der Anode und Kathode angeordnet ist, aufweist, **dadurch gekennzeichnet, dass** zwei Messstellen innerhalb der Elektrolysezelle (3) angeordnet sind, zwischen denen eine Potentialdifferenz messbar ist, die als Signal an eine Steuereinheit übermittelbar ist, wobei die Steuereinheit eingerichtet ist eine Versorgungsspannung der Elektrolysezelle (3) in Abhängigkeit von diesem Signal ein- oder auszuschalten, wobei eine Erhöhung des Wasserdurchflusses eine Änderung der Potentialdifferenz erzeugt, die ein Signal zum Einschalten der Elektrolysezelle durch die Steuereinheit auslöst und eine Senkung des Wasserdurchflusses eine Änderung der Potentialdifferenz erzeugt, die ein Signal zum Ausschalten der Elektrolysezelle durch die Steuereinheit auslöst, und im ausgeschalteten Zustand der Versorgungsspannung an der Elektrolysezelle (3) eine Ruhespannung von 0,2 bis 2 V anliegt.

6. Vorrichtung nach Anspruch 7 **dadurch gekennzeichnet, dass** die Messstellen durch Elektroden der Elektrolysezelle (3) gebildet werden.

7. Vorrichtung nach einem der Ansprüche 7 bis 8, **dadurch gekennzeichnet, dass** die Trennschicht eine Membran ist, insbesondere ein Feststoffelektrolyt.

8. Vorrichtung nach einem der Ansprüche 7 bis 9, **dadurch gekennzeichnet, dass** die Versorgungsspannung der Elektrolysezelle (3) im eingeschalteten Zustand 6 - 40 V, bevorzugt 16 - 36 V, besonders bevorzugt 24 V beträgt.

9. Vorrichtung nach einem der Ansprüche 7 bis 10, **dadurch gekennzeichnet, dass** die Ruhespannung im ausgeschalteten Zustand an der Elektrolysezelle (3) 0,4 - 1 V, bevorzugt 0,7 V beträgt.

10. Vorrichtung nach einem der Ansprüche 7 bis 11, **dadurch gekennzeichnet, dass** diese eine interne Stromversorgung in Form einer Batterie oder eines Akkumulators aufweist.

11. Vorrichtung nach einem der Ansprüche 7 bis 13, **dadurch gekennzeichnet, dass** mehrere Elektrolysezellen (3) vorgesehen sind

12. Vorrichtung nach einem der Ansprüche 7 bis 14, **dadurch gekennzeichnet, dass** diese einer Eismaschine vorgeschaltet ist.

## Claims

1. Method for controlling an electrolysis cell (3) for the electrolytic production of ozone, which can be switched between a switched-off and a switched-on state of a supply voltage and through which water can flow, wherein a change of the water flow in the electrolysis cell (3) triggers a signal which is transmitted to the control unit and the control unit switches on or switches off the supply voltage of the electrolysis cell (3), **characterised in that** the signal is triggered by a change of a potential difference which is measured between two measuring points within the flowed-through volume of the electrolysis cell (3), wherein an increase in the water through-flow generates a change in the potential difference, which triggers a signal to switch on the electrolysis cell (3) on the part of the control unit and a decrease in the water through-flow generates a change in the potential difference which triggers a signal to switch off the electrolysis cell (3) on the part of the control unit and furthermore a quiescent voltage of 0.2-2V is present at the electrolysis cell (3) in a switched-off state.

2. Method according to claim 1, **characterised in that** the measuring points are formed by electrodes of the electrolysis cell (3).

3. Method according to any of the preceding claims, **characterised in that** the supply voltage of the electrolysis cell (3) in switched-on state is 6 - 40 V, preferably 16 - 36 V, especially preferably 24 V.

4. Method according to any of the preceding claims, **characterised in that** the quiescent voltage present at the electrolysis cell (3) in a switched-off state is 0.4 - 1 V, preferably 0.7 V.

5. Device for the disinfection of water according to a method of claims 1 to 4 having at least one electrolysis cell (3) for the electrolytic production of ozone, wherein the electrolysis cell (3) has at least one anode, one cathode and one separating layer which is disposed between the anode and cathode, **characterised in that** two measuring points are disposed within the electrolysis cell (3), between which a potential difference can be measured, which can be transmitted as a signal to a control unit, wherein the control unit is configured to switch on or to switch off a supply voltage of the electrolysis cell (3) depending on the signal, wherein an increase in the water through-flow generates a change in the potential difference which triggers a signal to switch on the electrolysis cell on the part of the control unit and a decrease in the water through-flow generates a change in the potential difference which triggers a signal for switching off the electrolysis cell on the part of the control unit, and in the switched-off state of the supply voltage a quiescent voltage of 0.2 to 2 V is present at the electrolysis cell (3).

6. Device according to claim 7 **characterised in that** the measuring points are formed by electrodes of the electrolysis cell (3).

7. Device according to any of the claims 7 to 8, **characterised in that** the separating layer is a membrane, in particular a solid electrolyte.

8. Device according to any of claims 7 to 9, **characterised in that** the supply voltage of the electrolysis cell (3) in the switched-on state is 6 - 40 V, preferably 16 - 36 V, especially preferably 24 V.

9. Device according to any of claims 7 to 10, **characterised in that** the quiescent voltage present at the electrolysis cell (3) in a switched-off state is 0.4 - 1 V, preferably 0.7 V.

10. Device according to any of claims 7 to 11, **characterised in that** this device has an internal current supply in the form of a battery or of an accumulator.

11. Device according to any of claims 7 to 13, **characterised in that** several electrolysis cells (3) are provided.

12. Device according to any of claims 7 to 14, **characterised in that** this device is connected upstream of an ice machine.

## Revendications

1. Procédé de commande d'une cellule d'électrolyse (3) pour la production électrolytique d'ozone, qui peut être commutée entre un état mis hors circuit et un mis en circuit d'une tension d'alimentation et peut être traversée par de l'eau, dans lequel une modification du débit d'eau dans la cellule d'électrolyse (3) déclenche un signal, lequel est transmis à une unité de commande et l'unité de commande met en ou hors circuit la tension d'alimentation de la cellule d'électrolyse (3), **caractérisé en ce que** le signal est déclenché par une modification d'une différence de potentiel, qui est mesurée entre deux points de mesure à l'intérieur du volume traversé de la cellule d'électrolyse (3), dans lequel une augmentation du débit d'eau produit une modification de la différence de potentiel, qui déclenche un signal pour la mise en circuit de la cellule d'électrolyse (3) par l'unité de commande et une baisse du débit d'eau produit une modification de la différence de potentiel, qui déclenche un signal pour la mise hors circuit de la cellule d'électrolyse (3) par l'unité de commande et en outre, dans l'état mis hors circuit, une tension de repos de 0,2 - 2 V s'applique à la cellule d'électrolyse (3).

2. Procédé selon la revendication 1, **caractérisé en ce que** les points de mesure sont formés par des électrodes de la cellule d'électrolyse (3).

3. Procédé selon l'une quelconque des revendications précédentes, **caractérisé en ce que** la tension d'alimentation de la cellule d'électrolyse (3), dans l'état mis en circuit, atteint 6 - 40 V, de préférence 16 - 36 V, de manière particulièrement préférée 24 V.

4. Procédé selon l'une quelconque des revendications précédentes, **caractérisé en ce que** la tension de repos s'appliquant à la cellule d'électrolyse (3) dans l'état mis hors circuit atteint 0,4 - 1 V, de préférence 0,7 V.

5. Dispositif de désinfection d'eau selon un procédé des revendications 1 à 4 avec au moins une cellule d'électrolyse (3) pour la production électrolytique d'ozone, dans lequel la cellule d'électrolyse (3) présente au moins une anode, une cathode et une couche de séparation, qui est disposée entre l'anode et la cathode, **caractérisé en ce que** deux points de mesure sont disposés à l'intérieur de la cellule d'électrolyse (3), entre lesquels une différence de potentiel peut être mesurée, qui peut être transmise en tant que signal à une unité de commande, dans lequel l'unité de commande est conçue pour mettre en ou hors circuit une tension d'alimentation de la cellule d'électrolyse (3) en fonction de ce signal, dans lequel une augmentation du débit d'eau produit une modification de la différence de potentiel, qui déclenche un signal pour la mise en circuit de la cellule d'électrolyse par l'unité de commande et une réduction du débit d'eau produit une modification de la différence de potentiel, qui déclenche un signal pour la mise hors circuit de la cellule d'électrolyse par l'unité de commande, et, dans l'état mis hors circuit de la tension d'alimentation, une tension de repos de 0,2 à 2 V s'applique à la cellule d'électrolyse (3).

6. Dispositif selon la revendication 7, **caractérisé en ce que** les points de mesure sont formés par des électrodes de la cellule d'électrolyse (3).

7. Dispositif selon l'une quelconque des revendications 7 à 8, **caractérisé en ce que** la couche de séparation est une membrane, en particulier un électrolyte solide.

8. Dispositif selon l'une quelconque des revendications 7 à 9, **caractérisé en ce que** la tension d'alimentation de la cellule d'électrolyse (3), dans l'état mis en circuit, atteint 6 - 40 V, de préférence 16 - 36 V, de manière particulièrement préférée 24 V.

9. Dispositif selon l'une quelconque des revendications 7 à 10, **caractérisé en ce que** la tension de repos, dans l'état mis hors circuit, sur la cellule d'électrolyse (3) atteint 0,4 - 1 V, de préférence 0,7 V.

10. Dispositif selon l'une quelconque des revendications 7 à 11, **caractérisé en ce que** celui-ci présente une alimentation en courant interne sous forme d'une batterie ou d'un accumulateur.

11. Dispositif selon l'une quelconque des revendications 7 à 13, **caractérisé en ce que** plusieurs cellules d'électrolyse (3) sont prévues.

12. Dispositif selon l'une quelconque des revendications 7 à 14, **caractérisé en ce que** celui-ci est monté en amont d'une machine à glace.
